**Europäisches Patentamt**

(19) **European Patent Office**

**Office européen des brevets**

(11) Veröffentlichungsnummer: **0 199 249**
**B1**

(12) # EUROPÄISCHE PATENTSCHRIFT

(45) Veröffentlichungstag der Patentschrift:
06.09.89

(51) Int. Cl.⁴: **H 01 R 13/53,** H 02 B 11/04,
H 02 G 15/103

(21) Anmeldenummer: 86105127.4

(22) Anmeldetag: 14.04.86

(54) **Elektrische Verbindung.**

(30) Priorität: 24.04.85 DE 8512168 U

(43) Veröffentlichungstag der Anmeldung:
29.10.86 Patentblatt 86/44

(45) Bekanntmachung des Hinweises auf die Patenterteilung:
06.09.89 Patentblatt 89/36

(84) Benannte Vertragsstaaten:
CH DE FR GB LI NL

(56) Entgegenhaltungen:
FR-A- 2 096 734
FR-A- 2 141 752
US-A- 1 773 713
US-A- 1 773 715
US-A- 3 513 425
US-A- 3 845 458

(73) Patentinhaber: Siemens Aktiengesellschaft,
Wittelsbacherplatz 2, D-8000 München 2 (DE)

(72) Erfinder: Poth, Rainer, Freiherr-von-Stein-Strasse 2,
D-6368 Bad Vilbel 4 (DE)

ACTORUM AG

## Beschreibung

Die Erfindung bezieht sich auf einen elektrischen Verbinder mit einer auftrennbaren Strombahn, die zwei etwa miteinander fluchtende stabförmige und jeweils von einem roationssymmetrischen Isolierkörper umgebene Leiter und eine diese Leiter verbindende, zum Ausgleichen von Fluchtabweichungen der stabförmigen Leiter ausgebildete Kontaktvorrichtungen aufweist, wobei zwischen den beiden Isolierkörpern ein Zwischenraum besteht.

Ein Verbinder dieser Art ist durch die FR-A-2 096 734 bekannt geworden. Der erwähnte Zwischenraum zwischen den beiden Isolierkörpern ist dabei radial offen. Dort unterliegt das Isoliermedium, beispielsweise atmosphärische Luft, einer Beanspruchung durch das elektrische Feld, das von den zu verbindenden Leitern ausgeht. Der Erfindung liegt die Aufgabe zugrunde, diese Beanspruchung des Isoliermediums zu verringern.

Gemäss der Erfindung wird diese Aufgabe durch folgende Merkmale gelöst:

a) Beide Isolierkörper sind mindestens auf einem Teil ihrer Länge gemeinsam einer Manschette aus elastischem Isolierstoff umgeben, die den Zwischenraum abdeckt und in Höhe des Zwischenraumes mit einer umlaufenden Wulst versehen ist, die einen umlaufenden, nach dem Zwischenraum offenen Hohlraum aufweist; -
b) die einander zugekehrten Stirnflächen der Isolierkörper und die Oberfläche des Hohlraumes der Manschette sind elektrisch leitfähig und stehen sowohl untereinander als auch mit den Leitern in elektrisch leitfähiger Verbindung.

Bei dem Verbinder nach der Erfindung befinden sich die stabförmigen Leiter und die diesen Leitern zugekehrte Innenseite der Manschette auf demselben elektrischen Potential, wodurch erreicht ist, dass das in dem Hohlraum befindliche Isoliermedium dielektrisch nicht beansprucht wird.

Jeder Isolierkörper kann an seiner an den Zwischenraum angrenzenden Stirnfläche eine zentrische Vertiefung aufweisen, die zur Aufnahme des zugeordneten Abschnittes der Kontaktvorrichtung ausgebildet ist. Diese Massnahme ermöglicht es, diesen Abstand zwischen den Isolierkörpern geringer zu wählen und erleichtert es dadurch, die zur Vermeidung von Glimmentladungen vorgesehene leitende Beschichtung in nur geringem Abstand von den Leitern anzuordnen.

Die Isolierkörper können jeweils die Form zweier mit ihren grösseren Grundflächen aufeinander gesetzter Kegelstümpfe aufweisen. Auf diese Weise erhalten sowohl die äusseren Enden des Verbinders als auch die zur Aufnahme der Manschette vorgesehenen Umfangsflächen eine zweckmässige Gestalt. In diesem Zusammenhang empfiehlt sich eine Bemessung derart, dass sich die Manschette etwa vom grössten Durchmesser des einen Isolierkörpers bis etwa zum grössten Durchmesser des anderen Isolierkörpers erstreckt.

Jeder der beiden Isolierkörper kann einen umlaufenden metallischen Flansch aufweisen, der die zugeordnete freie Stirnfläche der Manschette übergreift sowie im zugeordneten Isolierkörper in einer elastischen, elektrisch leitfähigen Schicht endet, die spaltfrei im Isolierkörper angeordnet ist. Hierdurch bildet der Flansch ein Widerlager der Manschette, die auf diese Weise zwangsläufig in Berührung mit auf Erdpotential befindlichen Teilen gelangt. In Verbindung hiermit ist es vorteilhaft, wenn die äussere Mantelfläche der Manschette elektrisch leitfähig ist und mit den geerdeten Flanschen in elektrisch leitfähiger Verbindung steht. Hierdurch gelangt die gesamte Aussenfläche der Manschette auf Erdpotential und somit berührungssicher.

Die Manschette kann zum Zwischenraum zwischen den Isolierkörpern in zwei Lippen auslaufen, die jeweils mit einer den Zwischenraum begrenzenden Stirnfläche des angrenzenden Isolierkörpers fluchten, und die elektrisch leitfähige Schicht der Oberfläche des Hohlraumes der Manschette und der einander zugekehrten Stirnflächen der Isolierkörper können sich bis zu einem Endabschnitt der angrenzenden Mantelflächen der jeweiligen Teile fortsetzen. Hierdurch ist eine gute elektrische Verbindung der leitfähigen Beschichtung der Oberfläche des Hohlraumes und der Innenseite der Manschette sichergestellt.

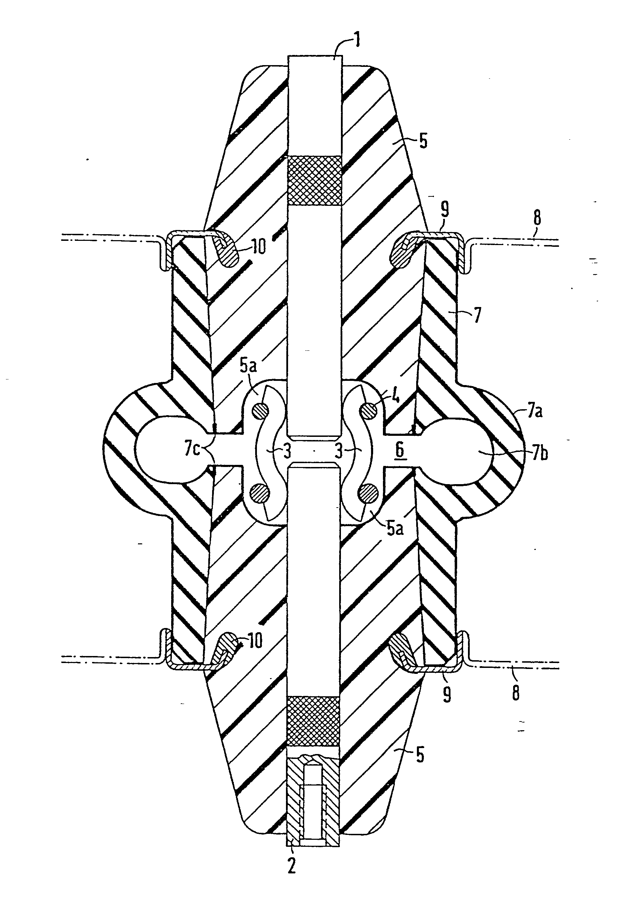

Ein Ausführungsbeispiel der Erfindung ist in der Zeichnung rein schematisch in einem Aufriss im Schnitt dargestellt.

In der Zeichnung sind mit 1 beziehungsweise 2 zwei etwa mit einander fluchtende, eine auftrennbare Strombahn bildende Leiter bezeichnet. Die Leiter 1, 2 sind durch eine Kontaktvorrichtung verbunden, die zum Ausgleichen von Fluchtabweichungen der Leiter 1, 2 ausgebildet ist und aus Kontaktlamellen 3 sowie die Kontaktlamellen 3 umfassenden Ringfedern 4 besteht.

Die Leiter 1, 2 sind jeweils von einem rotationssymmetrischen elektrischen Isolierkörper 5, beispielsweise aus Füllstoffe enthaltendem duroplastischen Kunststoff, umgeben. Die Isolierkörper 5 sind untereinander gleich. Zwischen den einander zugekehrten Stirnflächen der Isolierkörper 5 besteht zum Auffangen von Fertigungstoleranzen und Wärmedehnungen ein Zwischenraum 6. Auch die einander zugekehrten Enden der Leiter 1, 2 sind zum Ausgleich von Fertigungstoleranzen und Wärmedehnungen in einem Abstand gehalten, für den jedoch in der Zeichnung kein Bezugszeichen eingetragen ist.

In den einander zugekehrten Stirnflächen der Isolierkörper 5 ist jeweils eine zentrische Vertiefung 5a vorgesehen, die zur Aufnahme des zugeordneten Abschnittes der Kontaktvorrichtung 3, 4 ausgebildet ist.

Zweckmässig weisen die Isolierkörper 5 jeweils die Form zweier Kegelstümpfe auf, die mit ihren grösseren Durchmessern aufeinander gesetzt sind.

Mindestens auf einen Teil ihrer Länge sind beide Isolierkörper 5 von einer ihnen gemeinsamen Manschette 7 aus elastischem Isolierstoff umgeben, die satt an den Aussenflächen der Isolierkörper 5 anliegt und den Zwischenraum 6 abdeckt. Die Manschette 7 erstreckt sich im dargestellten Beispiel etwa zum grössten Durchmesser des einen Isolierkörpers 5 zum grössten Durchmesser des anderen Isolierkörpers 5.

In Höhe des Zwischenraumes 6 ist die Manschette 7 mit einem umlaufenden Wulst 7a versehen, der einen nach dem Zwischenraum 6 offenen Hohlraum 7b umschliesst.

Durch den Wulst 7a und den Hohlraum 7b können grobe Fluchtabweichungen der Leiter 1, 2 von der Manschette 7 leicht ausgeglichen werden.

Zum Vermeiden von Glimmentladungen innerhalb des Zwischenraumes 6 und des Hohlraumes 7b sind die Stirnflächen der Isolierkörper 5 einschliesslich ihrer Vertiefungen 5a und ausserdem die Oberfläche des Hohlraumes 7b elektrisch leitfähig. Die elektrisch leitfähigen Flächen stehen sowohl untereinander, als auch mit den Leitern 1, 2 in elektrisch leitfähiger Verbindung.

Im dargestellten Beispiel läuft die Manschette zum Zwischenraum 6 in zwei Lippen 7c aus, die jeweils mit einer den Zwischenraum 6 begrenzenden Stirnfläche eines Isolierkörpers 5 fluchten. Mit dieser Ausbildung wird die Möglichkeit einer elektrisch leitfähigen Verbindung zwischen der elektrisch leitfähigen Oberfläche des Hohlraumes 7b und den zugeordneten Stirnflächen der Isolierkörper 5 eröffnet. Diese elektrisch leitfähige Verbindung wird dadurch hergestellt, dass die elektrisch leitfähige Beschichtung der genannten Oberflächen bis zu einem angrenzenden Endabschnitt der inneren Mantelfläche der Manschette 7 und zu einem angrenzenden Endabschnitt der Mantelfläche jedes Isolierkörpers 5 fortgesetzt ist. Durch diese Ausbildung liegen die leitfähigen Endabschnitte der Mantelfläche der Manschette 7 und die leitfähigen Abschnitte der Mantelflächen der Isolierkörper 5 in engem elektrischen Kontakt aneinander.

Zum Einbau der Anordnung, beispielsweise in (strichpunktiert dargestellten) Wänden 8 eines elektrischen Schaltfeldes oder dergleichen, ist jeder Isolierkörper 5 mit einem umlaufenden metallischen Flansch 9 versehen, der die zugeordnete freie Stirnfläche der Manschette 7 übergreift sowie im zugeordneten Isolierkörper 5 in einer elastischen, elektrisch leitfähigen Schicht 10 endet, die spaltfrei im jeweiligen Isolierkörper 5 angeordnet ist.

Um die Erdung der Anordnung zu ermöglichen, ist die äussere Mantelfläche der Manschette 7 ebenfalls elektrisch leitfähig ausgebildet und steht mit den Flanschen 9 in elektrisch leitfähiger Verbindung.

## Patentansprüche

1. Elektrischer Verbinder mit einer auftrennbaren Strombahn, die zwei etwa miteinander fluchtende stabförmige und jeweils von einem rotationssymmetrischen Isolierkörper (5) umgebene Leiter (1, 2) und eine diese Leiter (1, 2) verbindende, zum Ausgleichen von Fluchtabweichungen der stabförmigen Leiter (1, 2) ausgebildete Kontaktvorrichtungen (3, 4) aufweist, wobei zwischen den beiden Isolierkörpern (5) ein Zwischenraum (6) besteht, gekennzeichnet durch die Merkmale:
a) beide Isolierkörper (5) sind mindestens auf einem Teil ihrer Länge gemeinsam von einer Manschette (7) aus elastischem Isolierstoff umgeben, die den Zwischenraum (6) abdeckt und in Höhe des Zwischenraumes (6) mit einer umlaufenden Wulst (7a) versehen ist, die einen umlaufenden, nach dem Zwischenraum (6) offenen Hohlraum (7b) aufweist;
b) die einander zugekehrten Stirnflächen der Isolierkörper (5) und die Oberfläche des Hohlraumes (7b) der Manschette (7) sind elektrisch leitfähig und stehen sowohl untereinander als auch mit den Leitern (1, 2) in elektrisch leitfähiger Verbindung.

2. Elektrischer Verbinder nach Anspruch 1, dadurch gekennzeichnet, dass jeder Isolierkörper (5) in seiner an den Zwischenraum (6) angrenzenden Stirnfläche eine zentrische Vertiefung (5a) aufweist, die zur Aufnahme des zugeordneten Abschnittes der Kontaktvorrichtung (3, 4) ausgebildet ist.

3. Elektrischer Verbindung nach Anspruch 1 und 2, dadurch gekennzeichnet, dass die Isolierkörper (5) jeweils die Form zweier mit ihren grösseren Grundflächen aufeinandergesetzter Kegelstümpfe aufweisen.

4. Elektrischer Verbinder nach Anspruch 1 bis 3, dadurch gekennzeichnet, dass sich die Manschette (7) etwa vom grössten Durchmesser des einen Isolierkörpers (5) bis etwa zum grössten Durchmesser des anderen Isolierkörpers (5) erstreckt.

5. Elektrischer Verbinder nach Anspruch 1 bis 4, dadurch gekennzeichnet, dass jeder Isolierkörper (5) einen umlaufenden metallischen Flansch (9) aufweist, der die zugeordnete freie Stirnfläche der Manschette (7) übergreift sowie im zugeordneten Isolierkörper (5) in einer elastischen, elektrisch leitfähigen Schicht (10) endet, die spaltfrei im Isolierkörper (5) angeordnet ist.

6. Elektrischer Verbinder nach Anspruch 1 bis 5, dadurch gekennzeichnet, dass die äussere Mantelfläche der Manschette (7) elektrisch leitfähig ist und mit den metallischen Flanschen (9) in elektrisch leitfähiger Verbindung steht.

7. Elektrischer Verbinder nach Anspruch 1 bis 6, dadurch gekennzeichnet, dass die Manschette (7) zum Zwischenraum (6) in zwei Lippen (7c) ausläuft, die jeweils mit einer den Zwischenraum (6) begrenzenden Stirnfläche des angrenzenden Isolierkörpers (5) fluchten und dass die elektrische leitfähige Schicht der Oberfläche des Hohlraumes (7b) der Manschette (7) und der einander zugekehrten Stirnflächen der Isolierkörper (5) sich bis zu einem Endabschnitt der angrenzenden Mantelflächen der jeweiligen Teile (2, 7) fortsetzt.

## Revendications

1. Connecteur électrique comprenant une voie de courant pouvant être interrompue, qui comporte des conducteurs (1, 2) en forme de tiges, qui sont alignés approximativement l'un sur l'autre et sont entourés chacun par un corps isolant (5) à symétrie de révolution, et des dispositifs de contact (3, 4), qui relient ces conducteurs (1, 2) et sont agencés de manière à compenser des écarts d'alignement des conducteurs en forme de tiges (1, 2), un espace intercalaire (6) existant entre les deux corps isolants (5), remarquable par les caractéristiques suivantes:

a) les deux corps isolants (5) sont entourés en commun, au moins sur une partie de leur longueur, par un manchon (7) réalisé en un matériau isolant élastique, qui recouvre l'espace intercalaire (6) et comporte, au niveau de l'espace intercalaire (6), un bourrelet circonférentiel (7a) comprenant une cavité circonférentielle (7b), s'ouvrant en direction de l'espace intercalaire (6);

b) les surfaces frontales, qui sont tournées l'une vers l'autre, des corps isolants (5) et la surface de la cavité (7b) du manchon (7) sont électriquement conductrices et sont reliées, d'une manière électriquement conductrice, aussi bien entre elles qu'aux conducteurs (1, 2).

2. Connecteur électrique suivant la revendication 1, caractérisé par le fait que chaque corps isolant (5) comporte, dans sa surface frontale limitant l'espace intercalaire (6), un renfoncement centré (5a), qui est agencé de manière à loger la section associée du dispositif de contact (3, 4).

3. Connecteur électrique suivant les revendications 1 et 2, caractérisé par le fait que les corps isolants (5) possèdent respectivement la forme de deux troncs de cône appliqués l'un contre l'autre par leurs surfaces de base les plus grandes.

4. Connecteur électrique suivant les revendications 1 à 3, caractérisé par le fait que le manchon (7) s'étend approximativement entre la partie de diamètre maximum d'un corps isolant (5) et approximativement la partie de diamètre maximum de l'autre corps isolant (5).

5. Connecteur électrique suivant les revendications 1 à 4, caractérisé par le fait que chaque corps isolant (5) possède une bride métallique circonférentielle (9), qui s'engage par-dessus la surface frontale associée libre du manchon (7) et se termine, dans le corps isolant associé (5), par une couche élastique électriquement conductrice (10), qui est disposée, sans la présence d'une fente, dans le corps isolant (5).

6. Connecteur électrique suivant les revendications 1 à 5, caractérisé par le fait que la surface enveloppe extérieure du manchon (7) est électriquement conductrice et est reliée, selon une liaison électriquement conductrice, aux brides métalliques (9).

7. Connecteur électrique suivant les revendications 1 à 6, caractérisé par le fait que le manchon (7) se termine, en direction de l'espace intercalaire (6), en formant deux lèvres (7c), qui sont alignées avec les surfaces frontales respectives, qui limitent l'espace intercalaire (6), du corps isolant contigu (5), et que la couche électriquement conductrice de la surface de la cavité (7b) du manchon (7) et des surfaces frontales, qui se font face, des corps isolants (5) se prolonge jusqu'à une section d'extrémité de la surface enveloppe contiguë des éléments respectifs (2, 7).

## Claims

1. Electrical connector with a current path which is capable of being split and has two substantially aligned, bar-shaped conductors (1, 2) which are each surrounded by a rotationally symmetrical insulating body (5) and a contact arrangement (3, 4) connecting these conductors (1, 2) and adapted to compensate for misalignments of the bar-shaped conductors (1, 2), there being an interspace (6) between the two insulating bodies (5), characterised by the features:

a) both insulating bodies (5) are surrounded, at least along one portion of their length, jointly by a collar (7) of elastic insulating material, which collar covers the interspace (6) and is provided at the level of the interspace (6) with a circumferential bulge (7a) which has a circumferential cavity (7b) open towards the interspace (6);

b) the faces of the insulating bodies (5), which faces are turned towards each other, and the surface of the cavity (7b) of the collar (7) are electrically conductive and communicate in an electrically conductive manner both one with the other and also with the conductors (1, 2).

2. Electrical connector according to claim 1, characterised in that each insulating body (5) has in its face adjacent to the interspace (6) a central recess (5a) which formed for the purpose of receiving the associated section of the contact arrangement (3, 4).

3. Electrical connector according to claim 1 and 2, characterised in that the insulating bodies (5) each have the shape of two truncated cones with their greater basal surfaces set one upon the other.

4. Electrical connector according to claim 1 to 3, characterised in that the collar (7) extends substantially from the greatest diameter of the one insulating body (5) to substantially the greatest diameter of the other insulating body (5).

5. Electrical connector according to claim 1 to 4, characterised in that each insulating body (5) has a circumferential metallic flange (9) which overlaps the associated free face of the collar (7) and also ends in the associated insulating body (5) in a elastic, electrically conductive layer (10) which is arranged without gap in the insulating body (5).

6. Electrical connector according to claim 1 to 5, characterised in that the outer lateral surface of the collar (7) is electrically conductive and communicates with the metallic flanges (9) in an electrically conductive manner.

7. Electrical connector according to claim 1 to 6, characterised in that the collar (7) terminates at the interspace (6) in two lips (7c) which are each in alignment with a face of the adjacent insulating body (5), (said face) delimiting the interspace (6), and in that the electrically conductive layer of the surface of the cavity (7b) of the collar (7) and of the faces of the insulating bodies (5) turned towards each other continues as far as an end section of the adjacent lateral surfaces of the respective parts (2, 7).